**Europäisches Patentamt**

**European Patent Office**

**Office européen des brevets**

(19)

(11) Veröffentlichungsnummer: **0 235 821**

**- B1**

(12) **EUROPÄISCHE PATENTSCHRIFT**

(45) Veröffentlichungstag der Patentschrift: **03.10.90**

(51) Int. Cl.⁵: **F 16 H 25/24**

(21) Anmeldenummer: **87103163.9**

(22) Anmeldetag: **05.03.87**

(54) Schraubgetriebe.

(30) Priorität: **07.03.86 DD 287654**
**16.10.86 DD 295302**

(43) Veröffentlichungstag der Anmeldung:
**09.09.87 Patentblatt 87/37**

(45) Bekanntmachung des Hinweises auf die
Patenterteilung:
**03.10.90 Patentblatt 90/40**

(84) Benannte Vertragsstaaten:
**DE FR GB IT NL SE**

(56) Entgegenhaltungen:
**DE-B-2 138 011**
**DE-C-1 041 315**
**US-A-3 133 453**
**US-A-3 736 801**

(73) Patentinhaber: **VEB KOMBINAT ROBOTRON**
**Grunaer Strasse 2**
**DDR-8012 Dresden (DD)**

(72) Erfinder: **Rolf, Starec, Dipl.-Ing.**
**Karl-Marx-Allee 31**
**DD-9010 (DD)**

(74) Vertreter: **Palgen, Peter, Dr.**
**Patentanwälte Kuborn & Dr. Palgen**
**Mulvanystrasse 2**
**D-4000 Düsseldorf (DE)**

Courier Press, Leamington Spa, England.

**Beschreibung**

Anwendungsgebiet der Erfindung

Die Erfindung betrifft ein Schraubgetriebe für Präzisionsantriebe in der Feinmechanik und im Maschinenbau.

Charakteristik der bekannten technischen Lösungen. Zur Umwandlung einer Drehbewegung in einer translatorische Bewegung und umgekehrt mit hoher Präzision sind Getriebe erforderlich, die sich neben der nötigen Genauigkeit der An- und Abtriebsteile in besonder em Maße durch einen geringen Verschleiß auszeichnen müssen. Dieser ist bei Getrieben immer dann vorhanden, wenn eine Gleitreibung durch eine Rollreibung ersetzt werden kann und auch Mischformen vermieden werden können.

Schraubgetriebe, die aus einer Schraubspindel und einer Mutter bestehen und deren Gewinde jeweils ein Bewegungsgewinde ist, weisen einer reine Gleitreibung auf. Diese Getriebe erfordern neben einer Verschleißarmut zur Verminderung des Getriebespiels besondere Maßnahmen für eine radiale oder axiale Verspannung. Diese Verspannung wirkt jedoch der Reibungs- und damit der Verschleißarmut direkt entgegen. Wegen ihres geringen Wirkungsgrades sind derartige Getriebe für Präzisionsantriebe mit schneller Bewegungsumwandlung nicht geeignet.

Durch die Anwendung von Rollreibung mittels in Gewinderillen abrollender Kugeln wird die Reibung erheblich reduziert. Die Herstellung dieser sogenannten Kugelumlaufgetriebe ist jedoch sehr aufwendig, da zwischen Schraube, Kugeln und Mutter eine sehr hohe Paßgenauigkeit für die Leichtgängikeit realisiert werden muß. Ferner müssen über einen Kugelumlaufkanal die aus der Mutter heraustretenden Kugeln wieder in die Mutter zurückgeführt werden. Durch den Umlaufkanal beanspruchen derartige Getriebe ferner einen relativ großen Raum, der wegen der Empfindlichkeit gegenüber Verschmutzung abgekapselt werden muß (DE—A—3 323 345, DE—A—3 323 347).

Der erhebliche Aufwand zur Herstellung von Kugelumlaufgetrieben hat zur Entwicklung sogenannter Wälzringschraubgetriebe verscheidenster Ausführungen geführt. Ihnen allen ist gemeinsam, daß die Innenringe von Kugellagern als Wälzringe ausgebildet sind, die an den Flanken des Gewindes der Schraubspindel anliegen. Der Durchmesser der Wälzringe ist dabei größer als der der Schraubspindel. Die Außenringe der Kugellager sind mit einem Gehäuse, dem sogenannten Muttergehäuse, verbunden. Dieses stützt sich über Nadellager oder Gleitlager auf der Spindel ab, oder es ist eine externe Führung vorgesehen.

Auch den Wälzringschraubgetrieben haften verschiedene Nachteile an. Infolge der Exzentrizität der Drehachsen des Wälzringes und der Schraubspindel entsteht keine reine Rollreibung. Zusätzliche Gleitanteile enstehen durch die Abstützung und Führung des Muttergehäuses auf der Spindel. Ferner sind besondere Maßnahmen zur radialen Justierung und zur Schrägstellung der Wälzringe in Richtung der Gewindesteigung und zur Führung des Muttergehäuses längs der Schraubspindel erforderlich. (DE—A—27 25 054, DE—A—32 25 496, DE—A—33 13 453).

Bei einer weiteren bekannten Einrichtung, die aus einer Gewindespindel mit zylindrischem Kern und einem sich vom Kerndurchmesser radial nach außen erstreckenden Gewinderprofil besteht, liegt jeweils eine Rolle mit ihrer Umfangsfläche der Links- bzw. Rechtsflanke des Gewindes an ("Einfache Getriebe", Sieker, 1956, 2. Auflage, S.170). Ein Ausführungsform dieses mit reiner Rollreibung arbeitenden Prinzips ist in der DE—A—16 25 067 beschrieben. Die Rollen müssen hierbei über Justiermittel auf die zugehörige Links- bzw. Rechtsflanke ausgerichtet werden, damit in jeder Bewegungsrichtung der die Rollen tragenden Mutter das axiale Spiel beseitigt wird. Die Mutter erfordert eine exakte Führung, die in dieser bekannten Lösung durch eine beidseitige Lagerung der Mutter auf der Schraubspindel erfolgt. Hierbei stützen sich jeweils drei um 120° längs des Umfangs der Schraubspindel versetzt angeordnete Stützrollen auf der zylindrischen Oberfläche des Gewindes der Schraubspindel ab, die hierzu sowohl in radialer als auch in Richtung der Gewindesteigung justiert werden müssen.

Ein weiteres bekanntes Schraubgetriebe mit Rollreibung weist ebenfalls eine Gewindespindel mit zylindrischem Kern und einem sich vom Kerndurchmesser radial nach außen erstreckenden Gewindeprofile auf. Im Gegensatz zu der Lösung gemäß der DE—A—16 25 067 liegen jedoch die Rollen nicht in dem Raum zwischen zwei benachbarten Windungen. Mittels eines Einstisches an der Stirnseite der Rolle ist es möglich, daß durch den entstandenen Raum eine oder mehrere Gewindewindungen aufgenommen werden können. Dadurch ist dieses Schraubgetriebe nicht von einer relativ großen und dem Rollendurchmesser entsprechenden Ganghöhe abhängig. Die Nachteile bezüglich einer aufwendigen Justierung der Rollen und einer Führung der die Rollen tragenden Mutter bleiben jedoch bestehen (DE—C—10 41 315).

Bei einem letztaufgeführten Schraubgetriebe ist die Schraubspindel in Form einer Schraubwendel mit relativ großer Ganghöhe und Breite dieser Wendel gestaltet. Die Umwandlung der Drehbewegung in eine Längsbewegung erfolgt mittels einer zylindrischen Rolle, deren Achse senkrecht zur Schrauspindel verläuft und deren zylindrische Oberfläche der links- und rechtsseitigen Schraubenkontur aufliegt. Die seitliche Führung des Muttergehäuses, in welchem die zylindrische Rolle gelagert ist, erfolgt durch eine Stütz- und Führungsrolle. Diese Rolle weist an ihrem Zylinderumfang einen Einstich auf, deren so entstandene Flanken der Wendelbreite aufliegen und somit die Schraubspindle seitlich umfassen. Durch diese Anordnung entstehen schädliche Gleitanteile, die in einem weiteren Ausführungsbeispiel durch die Lagerung von drei zylindrischen und um 120° längs des Schraubspindelumfangs versetzt angeordneten Rollen in dem Muttergehäuse vermieden werden. Die Nachteile dieses Schraubgetriebes bestehen in einer aufwendigen Führung des Muttergehäuses auf der Schraubspindel und einer aufwendigen Herstellung der Schraubwendel. Durch die Ausführung der Schraubspindel als Schraubwendel entsteht ferner ein schwingungsfähiges System, durch das die Positioniergenauigkeit bei größeren Drehmomenten beeinträchtigt wird (US—A—3 133 453).

Ziel der Erfindung
Das Ziel der Erfindung liegt in der Erhöhung der Genauigkeit von Schraubgetrieben für Präzisionsantriebe und in der Senkung des Aufwandes bei der Herstellung derselben.

Darlegung des Wesens der Erfindung
Die Aufgabe der Erfindung besteht darin, ein Schraubgetriebe für Präzisionsantriebe zu schaffen, das von einer axial beweglichen Mutter ausgeht, die mit der Umfangsfläche einer Rolle einer Gewindeflanke der Schraubspindel anliegt, und das sich auf wenig aufwendige Weise durch spiel- und verschleißkompensierende Eigenschaften, eine vereinfachte und präzise Führung der Mutter auf der Schraubspindel, einen hohen Wirkungsgrad und durch die Einsetzbarkeit auch bei großen Steigungen des Gewindes der Schraubspindel auszeichnet.

Erfindungsgemäß wird dies durch ein Schraubgetriebe mit den Merkmalen des Patentanspruchs 1 erreicht.

Der Kraftschluß zwischen der Rolle und den Gewindeflanken wird durch eine zweite Rolle erhöht, die der Rolle gegenüberliegt, mit ihrer Achse senkrecht zur Gewindesteigung ausgerichtet ist und dem Gewinde federnd anliegt. Zur Übertragung größerer Kräfte sind mehrere Rollen längs des Umfangs und längs der Drehachse der Schraubspindel angeordnet, die gleichzeitig wirkende Momente kompensieren. In gleicher Weise und zu dem gleichen Zweck ist eine Kombination mit den zweitgenannten Rollen ausführbar. Gemäß einem Ausführungsbeispiel ist die Rolle beidseits des Einstiches mit Aussparungen versehen, die ringförmige Wülste an der Rolle bilden. Mit diesen Wülsten greift die Rolle zwischen benachbarten Windungen der Schraubspindle ein. Die Steigung des Gewindes ist hierbei also wesentlich kleiner als der Rollendurchmesser.

Zur Aufnahme großer Lasten bei relativ kleinem Durchmesser der Schraubspindel liegt die Rolle bei einem weiteren Ausführungsbeispiel zusätzlich auf einer parallel zur Schraubspindel verlaufenden Schiene auf und rollt auf dieser ab.

Die Rolle ist in sich unabhängig voneinander drehende Rollenhälften teilbar.

Das Gewinde der Schraubspindel besteht vorteilhafter Weise aus einem in bakannter Art schraubenförmig um die Schraubspindel gewikkelten Draht, wobei die Schraubspindel mit einer schraubenförmigen Nut versehen ist, und der Draht in Form einer senkrecht zur Mittellinie vorgespannten Wendel den Nutbegrenzungslinien kraft- und formschlüssig aufliegt.

Ausführungsbeispiel
Die Erfindung soll nachstehend anhand der Zeichnung an mehreren Ausführungsbeispielen beschrieben werden. Es zeigen dabei:
Fig. 1: eine Vorderansicht des erfindungsgemäßen Schraubgetriebes,
Fig. 2: die zugehörige Seitenansicht,
Fig. 3: die zugehörige Draufsicht,
Fig. 4: das Schraubgetriebe mit mehreren Rollen,
Fig. 5: das Schraubgetriebe bei hoher vertikaler Belastung,
Fig. 6: das Schraubgetriebe mit geringer Gewindesteigung

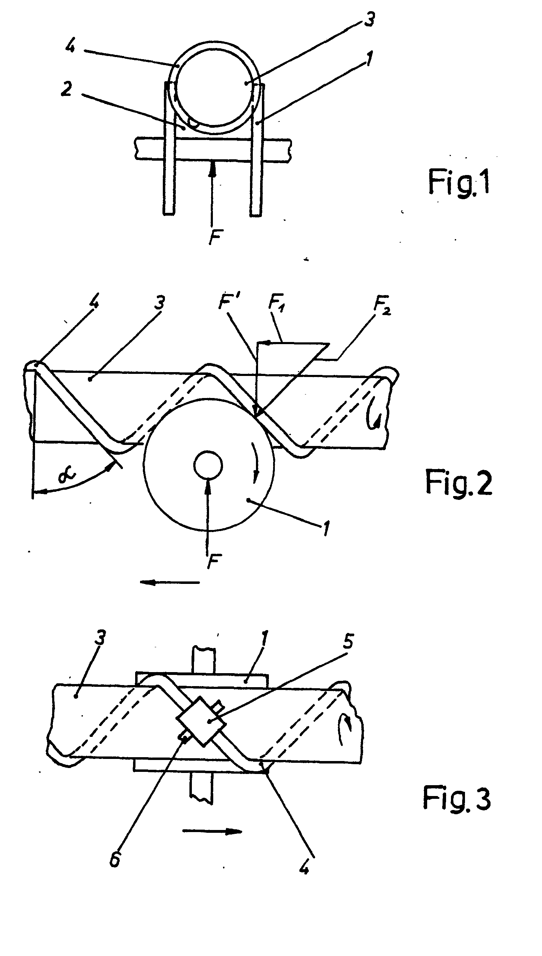

Gemäß den Figuren 1 bis 3 besteht das erfindungsgemäße Schraubgetriebe aus einer Rolle 1, die mit einem Einstich 2 versehen ist, und einer Schraubspindel 3. Der Kerndurchmesser der Schraubspindel 3 wird von dem Einstich 2 derart aufgenommen, daß die Umfangsfläche der Rolle 1 jeweils einer Rechts- bzw. Linksflänke eines Gewindes 4 der Schraubspindel 3 anliegt. Mittels einer auf die Rolle 1 wirkenden Kraft F wird die Rolle 1 längs des gesamten Einstellbereichs spielfrei und verschleißkompensierend in Anlage an diesen Gewindeflanken gehalten. Die Rolle 1 zentriert sich somit selbst und wird zugleich ohne zusätzliche Mittel parallel zur Schraubspindel 3 geführt. Die Rolle 1 übernimmt dadurch alle Funktionen einer herkömmlichen Mutter von Schraubgetrieben. In Fig. 2 führt die Rolle 1 mit ihrer Welle eine translatorische Bewegung in der angegebenen Pfeilrichtung aus, wobei sich die Rolle 1 zugleich im Uhr zeiger sinn dreht. An der Berührungsstelle zwischen dem Gewinde 4 und der Umfangsfläche der Rolle 1 entsteht dabei eine Vorschubkraft $F_1$, die bei Aenderung der Drehbewegung der Schraubspindel 3 sofort auf der anderen Seite des Einstiches 2 wirksam wird, aber an der anderen Flanke der Gewindewindung (Fig. 3). Das in Fig. 2 dargestellte Kräftedreieck der Reaktionskräfte zeigt, daß zur Erzeugung der Vorschubkraft $F_1$ die Kraft F den Wert

$$F' = \frac{F_1}{\tan(90-\alpha)}$$

annimmt, wenn $\alpha$ den Steigungswinkel des Gewindes 4 darstellt und wenn die Bedingung

$$208F' \geq \tfrac{1}{2}F$$

eingehalten wird. Daraus folgt gleichzeitig eine Austauschbarkeit von An- und Abtriebselement, da durch die Beziehung

$$F_2 = \frac{F'}{\cos(90-\alpha)}$$

gute Bedingungen für einen hohen Reibschluß zwischen der Rolle 1 und dem Gewinde 4 gegeben sind.

Zur Erhöhung des Wirkungsgrades ist, wie in Fig. 3 dargestellt, eine Rolle 5 angeordnet, die der Rolle 1 um 180° in Umfangsrichtung der Schraubspindel 3 versetzt gegenüberliegt. Diese Rolle 5 ist mit der Welle 6 senkrecht zur Steigung des Gewindes 4 ausgerichtet und rollt auf dem Gewinde 4 ab. Durch diese Anordnung kann nicht nur die Kraft F und damit der Kraftschluß erhöht werden, sondern es ist auch eine Kompensation auf die Schraubspindel 3 wirkender Kräfte und Momente möglich.

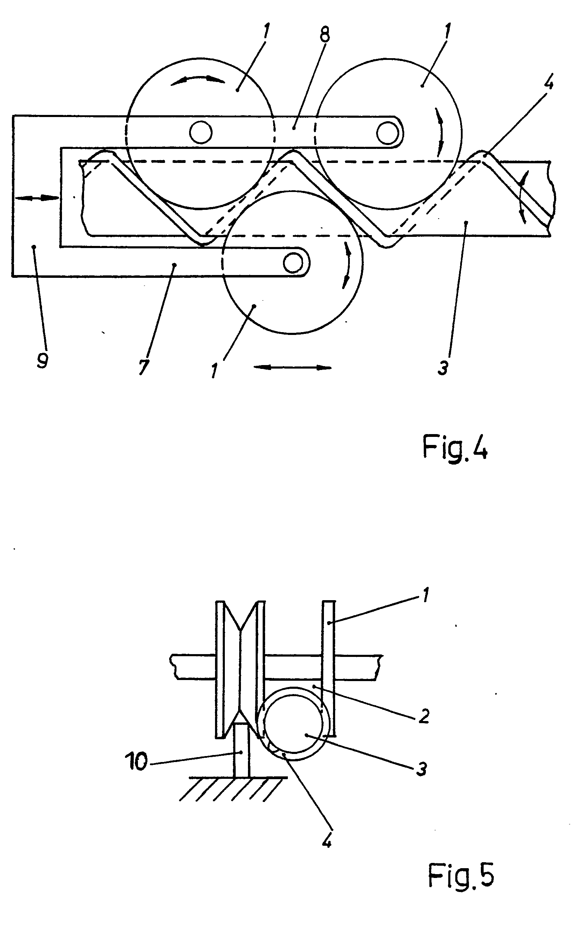

In dem Ausführungsbeispiel gemäß Fig. 4 ist dargestellt, wie mehrere der Rollen 1 längs des Umfangs und längs der Drehachse der Schraubspindel 3 zur Erhöhung der Übertragungskraft bei verminderter Flächenpressung und zur Kompensation von schädlichen Momenten angeordnet sind. Die Rollen 1 sind dazu auf Schenkeln 7, 8 eines u-förmigen Schlittens 9 gelagert, wobei die Schenkel 7, 8 zueinander vorgespannt sind. In ähnlicher Weise sind auch Anordnungen möglich, die eine Aufnahme hier zu seitlicher Kräfte ohne Momenteinwirkung auf die Schraubspindel 3 erlauben. Der Eingriff mehrerer längs des Umfangs und längs der Drehachse der Schraubspindel 3 angeordneter Abtriebselemente kann sowohl ausschließlich mittels der Rollen 1 oder in Kombination mit den Rollen 5 erfolgen.

In Fig. 5 ist dargestellt, wie auf einfachste Weise relativ große Lasten bei relativ kleinem Durchmesser mit einem hohen antriebstechnischen Wirkungsgrad mittels des erfindungsgemäßen Schraubgetriebes transportiert und positioniert werden können. Die Rolle 1 liegt hierzu mit einer vergrößerten Rollenbreite einer parallel zur Schraubspindel verlaufenden Schiene 10 auf, wobei der Rollradius, bezogen auf die Schiene 10 und das Gewinde 4, zur Erzielung einer reinen Rollreibung den gleichen Betrag aufweisen muß.

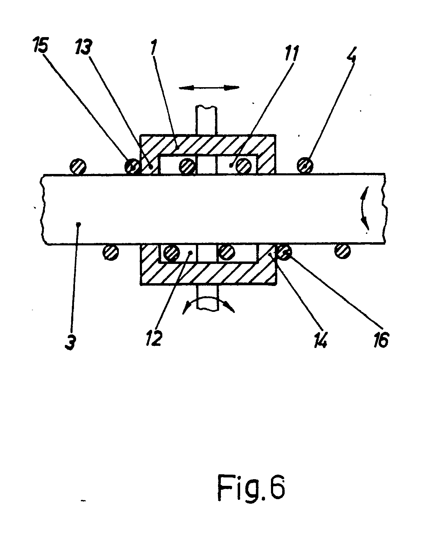

Das Ausführungsbeispiel nach Fig. 6 zeigt die Rolle 1 mit Aussparungen 11, 12 zu beiden Seiten des Einstiches 2. Hierdurch entstehen ringförmige Wülste 13, 14, die zwischen benachbarten Windungen des Gewindes 4 eingreifen. Gemäß Fig. 6 liegt einerseits eine Windung 15 der ringförmigen Wulst 13, andererseits eine Windung 16 der ringförmigen Wulst 14 und damit wie in den vorherigen Ausführungsbeispielen jeweils der Umfangsfläche der Rolle 1 auf.

Die Rolle 1 des erfindungsgemäßen Schraubgetriebes kann prinzipiell auch geteilt sein. Der Einstich 2, in dem der Kerndurchmesser der Schraubspindel 3 seine Aufnahme findet, wird in diesem Fall durch sich voneinander unabhängig drehende Rollenhälften wie z.B. Scheiben oder Kugellager gebildet.

Es ist vorteilhaft, das Gewinde 4 durch einen in bekannter Weise schraubenförmig um die Schraubspindel gewickelten Draht auszubilden. Zur Verbindung des Drahtes mit der Schraubspindel 3 ist dieselbe mit einer schraubenförmig um die Spindel verlaufenden Nut versehen, wobei der Draht den Nütbegrenzungslinien aufliegt, ohne den Grund der Nut zu berühren. Zur unverschiebbaren Auflage des Drahtes auf der Schraubspindel 3 liegt der Draht nicht nur formschlüssig, sondern auch kraftschlüssig den Nutbegrenzungslinien auf. Dies wird dadurch erreicht, daß der Draht vor seiner Verbindung mit der Spindel zu einer Drahtwendel geformt ist, deren Innendurchmesser kleiner ist als die Differenz zwischen dem Außendurchmesser der Schraubspindel 3 und dem zweifachen Betrag der Nuttiefe. Durch die somit zur Mittellinie erzeugte Vorspannung der Wendel ergibt sich in Verbindung mit dem Formschluß des Drahtes an den Nutbegrenzungslinien eine derart feste Verbindung des Drahtes mit der Spindel, daß auch hohe und punktförmig an dem Draht angreifende Kräfte übertragen werden, ohne den Draht von der Spindel lösen zu können.

Ausstellung der verwendeten Bezugszeichen

| | |
|---|---|
| 1 | Rolle |
| 2 | Einstich |
| 3 | Schraubspindel |
| 4 | Gewinde |
| 5 | Rolle |
| 6 | Welle |
| 7,8 | Schenkel |
| 9 | Schlitten |
| 10 | Schiene |
| 11,12 | Aussparung |
| 13,14 | ringförmige Wulst |
| 15,16 | Windung |
| $F, F_1, F', F_2$ | Kräfte |
| $\alpha$ | Steigungswinkel |

**Patentansprüche**

1. Schraubgetriebe für Präzisionsantriebe in der Feinmechanik und im Maschinenbau, das aus einer Schraubspindel (3) mit zylindrischen Kern und einem sich vom Kerndurchmesser radial nach außen erstreckenden Gewinde profil und einer axial beweglichen Mutter besteht, die eine Rolle trägt, deren Umfangsfläche einer Gewindeflanke anliegt, wobei die Mutter selbst durch eine Rolle (1) gebildet ist, dadurch gekennzeichnet, daß die Rolle an ihrem Zylinderumfang einen Einstich (2) aufweist, in dem die Schraubspindel (3) mit dem Kerndurchmesser derart aufnehmbar ist, daß zu beiden Seiten des Einstiches (2) die Rolle (1) mit ihren Umfangsflächen an der Rechts- und Linksflanke des Gewindes (4) der Schraubspindel (3) spielfrei und zentrierend anliegt.

2. Schraubgetriebe nach Anspruch 1, dadurch gekennzeichnet, daß der Rolle (1) eine weitere Rolle (5) zugeordnet ist, die der Rolle (1) um 180° in Umfangsrichtung der Schraubspindel (3) versetzt gegenüberliegt und mit ihrer Welle (6) senkrecht zur Steigung des Gewindes (4) der Schraubspindel (3) ausgerichtet ist und daß die weitere Rolle (5) dem Gewinde (4) federnd anliegt.

3. Schraubgetriebe nach Anspruch 1 und 2, dadurch gekennzeichnet, daß die Rolle (1) beidseits des Einstiches (2) mit Aussparungen (11, 12) versehen ist, die ringförmige Wülste (13, 14) bilden und die Wülste (13, 14) zwischen benachbarten Windungen des Gewindes (4) der Schraubspindel (3) eingreifen.

4. Schraubgetriebe nach Anspruch 1 und 3, dadurch gekennzeichnet, daß mehrere längs des Umfanges und längs der Drehachse der Schraubspindel (3) angeordnete und Momente kompensierende Rollen (1) angeordnet sind.

5. Schraubgetriebe nach Anspruch 1, 2 und 3, dadurch gekennzeichnet, daß mehrere längs des Umfanges und längs der Drehachse der Schraubspindel (3) angeordnete und Momente kompensierende Rollen (1 und 5) angeordnet sind.

6. Schraubgetriebe nach Anspruch 1 bis 5, dadurch gekennzeichnet, daß die Rolle (1) mit einer vergrößerten Rollenbreite einer parallel zur Schraubspindel (3) verlaufenden Schiene (10) aufliegt.

7. Schraubgetriebe nach Anspruch 1 bis 6, dadurch gekennzeichnet, daß die Rolle (1) in sich unabhängig voneinander drehende Rollenhälften geteilt ist.

8. Schraubgetriebe nach Anspruch 1 bis 3, dadurch gekennzeichnet, daß die Schraubspindel (3) mit einer schraubenförmigen Nut versehen ist und ein Draht in Form einer senkrecht zur Mittellinie der Schraubspindel (3) vorgespannten Wendel den Nutbegrenzungslinien Kraft- und formschlüssig aufliegt.

**Revendications**

1. Transmission à vis pour entraînement de précision en mécanique de précision et dans le domaine de la construction mécanique qui se compose d'une broche à vis (3) à corps cylindrique et profil de filetage dirigé radialement en saillie par rapport au diamètre du corps, et d'un écrou mobile axialement, portant un galet dont la surface périphérique s'appuie contre un flanc du filet, l'écrou étant lui-même constitué par un galet (1), caractérisée en ce que le galet comporte un dégagement (2) à son extrémité tournée vers la périphérie du cylindre, dégagement qui reçoit la broche filetée (3) suivant le diamètre du corps de la broche de façon que des deux côtés du dégagement (2), le galet (1) s'appuie par ses surfaces périphériques contre le flanc droit et le flanc gauche du filet (4) de la broche filetée (3), dans jeu et en assurant le centrage.

2. Transmission à vis selon la revendication 1, caractérisée en ce qu'un autre galet (5) est associé au galet (1), en regard du galet (1) avec un décalage de 180° dans la direction périphérique de la broche à vis (3) son axe (6) étant perpendiculaire au pas du filetage (4) de la broche à vis (3) et en ce que cet autre galet (5) s'appliquant élastiquement contre le filet (4).

3. Transmission à vis selon les revendications 1 et 2, caractérisée en ce que le galet (1) est muni de cavités (11, 12) de part et d'autre du dégagement (2), cavités qui forment des bourrelets annulaires (13, 14) venant en prise entre les spires voisines du filet (4) de la broche filetée (3).

4. Transmission à vis selon les revendications 1 et 3, caractérisée en ce que plusieurs galets (1 et 5) sont disposés le long de la périphérie et le long de l'axe de rotation de la broche filetée (3) assurant la compensation des couples.

5. Transmission à vis selon les revendications 1, 2, 3, caractérisée par plusieurs galets (1 et 5) prévus le long de la périphérie et le long de l'axe de rotation de la broche (3) et assurant la compensation des couples.

6. Transmission à vis selon les revendications 1 à 5, caractérisée en ce que le galet (1) prend appui par sa largeur de galet, augmentée, sur un rail (10) parallèle à la broche à vis (3).

7. Transmission à vis selon les revendications 1 à 6, caractérisée en ce que le galet (1) est subdivisé en des moitiés de galet tournant indépendamment l'une de l'autre.

8. Transmission à vis selon les revendications 1 à 3, caractérisée en ce que la broche à vis (3) est munie d'une rainure hélicoïdale et un fil en forme de spire précontrainte, perpendiculaire à l'axe médian de la broche à vis (3) s'appuie par une liaison par la forme et par la force sur les lignes de contour de la rainure.

**Claims**

1. Screw transmission for precision drives in the field of instrument mechanics and machine construction, comprising a screwed spindle (3) with a cylindrical core and a screw thread profile extending radially outwards from the core diameter and an axially movable nut which carries a roller of which the peripheral surface engages a flank of the screw thread, the nut itself being formed by a roller (1), characterised in that the roller has on its cylindrical surface a gap (2) in which the core diameter of the screw spindle (3) is recieved in such a way that on both sides of the gap (2) the roller (1) engages with its peripheral surfaces against the right and left-hand flanks of the thread (4) of the screwed spindle (3) in a manner which is free from play and which locates it.

2. Screw transmission according to Claim 1 characterised in that the roller (1) has associated with it a further roller (5) which lies opposite the roller (1) and offset by 180° in the direction of the circumference of the screwed spindle (3) and is directed with its shaft (6) perpendicular to the inclination of the thread (4) on the screwed spindle (3), and that the further roller (5) engages resiliently against the thread (4).

3. Screw transmission according to Claim 1 and 2 characterised in that the roller (1) is provided on both sides of the gap (2) with recesses (11, 12) which define ring-shaped beads (13, 14) and the beads engage between adjacent turns of the thread (4) of the screwed spindle (3).

4. Screw transmission according to Claim 1 and 3 characterised in that a number of rollers (1) are arranged along the periphery and along the axis of rotation of the screwed spindle (3) and are arranged to balance out the moments.

5. Screw transmission according to Claim 1, 2 and 3 characterised in that a number of rollers (1 and 5) are arranged along the periphery and along the axis of rotaiton of the screwed spindle (3) and they act to balance out moments.

6. Screw transmission according to Claims 1 to 5 characterised in that the roller (1) engages with an increased roller width against a rail (10) extending parallel to the screwed spindle (3).

7. Screw transmission according to Claims 1 to 6 characterised in that the roller (1) is split into mutually independently rotatable roller halves.

8. Screw transmission according to Claim 1 to 3 characterised in that the screwed spindle (3) is provided with a screw-shaped groove and a wire in the form of a helix pre-loaded perpenducular to the centre line of the screwed spindle (3) engages in a positive mechanical force-applying and locating manner against the defining line of the groove.

Fig.1

Fig.2

Fig.3

Fig.4

Fig.5

2

Fig.6